# EUROPEAN PATENT SPECIFICATION

(11) **EP 3 043 584 B1**
(45) Date of publication and mention of the grant of the patent: **29.05.2019**
(21) Application number: 15201573.1
(22) Date of filing: 21.12.2015
(51) Int. Cl.: H04W 12/00, H04L 29/06, G06F 21/31, G06F 21/55, G06F 17/50

(54) **USER DETERMINATION DEVICE AND METHOD**
BENUTZERBESTIMMUNGSVORRICHTUNG UND -VERFAHREN
PROCÉDÉ ET DISPOSITIF DE DÉTERMINATION D'UTILISATEUR

(30) Priority: 08.01.2015 JP 2015002377
(43) Date of publication of application: 13.07.2016
(73) Proprietor: FUJITSU LIMITED, Kawasaki-shi, Kanagawa 211-8588 (JP)
(72) Inventor: KATAYAMA, Yoshinori, Kanagawa, 211-8588 (JP); TSUDA, Hiroshi, Kanagawa, 211-8588 (JP)
(74) Representative: Hoffmann Eitle

(56) References cited:
- US-A1- 2013 239 195
- US-A1- 2014 078 061
- US-A1- 2014 317 726
- US-A1- 2014 344 927

## Description

### FIELD

The embodiments discussed herein are related to a user determination device, a user determination method, and a user determination program.

### BACKGROUND

In recent years, information theft and the like by targeted email attacks has been increasing as cases of cyber-attack. As an example of technology related to countermeasures against targeted email attacks, there is technology that detects spoofed email from an unauthorized terminal by appending identification information (for example, a MAC address) of the terminal that is the transmission source of an email in the email header when transmitting and receiving email.

Technology also exists that, based on the receiving history at the receiving side, detects spoofed email sent by the attacking side using an unauthorized personal computer (PC) or network.

However, although such technology is an effective countermeasure against targeted email attacks, and particularly as a countermeasure against spoofed mail, such technology is not capable of detecting emails fraudulently transmitted by, for example, an attacker who has hijacked an authorized terminal.

Recently, various attack cases have been occurring; for example, terminals have been hijacked across a network using a remote operation virus, attack emails have been sent from lost terminals, and emails have been sent by operating a PC while the actual user is absent. Hence countermeasures against spoofed mail are also needed for cases such as those in which an authorized terminal is hijacked. Moreover, since fraud that employs spoofing is becoming more cunning, it is necessary to detect transmission of spoofed messages by unauthorized users when messages are transmitted using Twitter (registered trademark), social networking services (SNS), and the like, rather than being limited to when emails are transmitted and received.

There has therefore been a proposal to ascertain traits of individual attacks to discover situations of user anomalies, and deter transmission of mail by an unauthorized user, perform alert processing, or the like. For example, technology has been proposed that acquires action trait information as habit information indicating habitual traits related to user operation on a terminal when a user who operates the terminal is operating the terminal.

There has also been a proposal for technology in which voice trait patterns spoken in a password by a sender are appended to an electronic mail, and, at the side of the receiver of the electronic mail, the appended voice trait patterns are compared against reference-use voice traits of the sender that were received in advance.

There has also been a proposal for technology in which operation information of a logged in user is acquired, and it is determined whether or not the logged in user is the actual user using the operation information of the logged in user and operation information of the user saved in a user operation information saving means.

There has also been a proposal for technology in which history of operations on an operation section are stored in an operation history storing section, and it is determined whether or not information input through the operation section fulfils pre-registered authentication conditions. In such technology, when the authentication conditions are fulfilled, whether or not the user who input the information is an unauthorized user who has executed abnormal operations is determined based on operation history stored in the operation history storing section.

However, in technology that acquires action trait information, it is assumed that there are input operations for predetermined items such as IDs and access information. There is therefore a possibility that a user performing spoofing will discover that actions must be taken to receive authentication, and will get through the authentication by performing actions different from normal. The same applies to cases in which voice trait patterns spoken in a password are employed.

US 2013/239195 A1 describes a method and a device of confirming an identity of a user operating a computer. Therefore, an aberration in an output of a mouse cursor is caused. The reaction of the user is monitored, extracted and compared with stored reactions.

D2, US 2014/078061 A1 mentions a system and a method for extracting biometric signatures from mouse dynamics of a user by introducing perturbations like changes in mouse velocity or position of the mouse and measuring motor responses of the user. An aberration may be a slight change of a cursor position, disappearance of the cursor or while keyboard typing output of false characters.

US 2014/317726 A1 describes a system, device and a method for detecting an identity of a user of an electronic device. User input like gesture, pointing dynamics etc. may be monitored and analyzed to obtain user-specific biometric trait as indication for a user-specific service usage pattern. The user may be challenged unconsciously.

US 2014/344927 A1 describes a device, a method and a system for extracting user specific features or traits characterizing an interaction of the user with a service through an input unit. Furthermore all user interactions are monitored and recorded in order to extract user-specific features of the interaction. The extracted user-specific features may be compared with previously captured user-specific features. For identifying a fraudulent usage, aberrations may be launched by delaying mouse, touch or key inputs.

### SUMMARY

An object of one aspect of technology disclosed herein is to make evasion actions difficult to spoof.

This object of the invention is solved by the subject matter of the independent claims, advantageous embodiments of the invention are disclosed in the dependent claims.

### BRIEF DESCRIPTION OF DRAWINGS

Fig. 1 is a functional block diagram illustrating a schematic configuration of a user determination system;
Fig. 2 is a diagram illustrating an example of an operation log database (DB);
Fig. 3 is a diagram illustrating an example of an operation trait information DB;
Fig. 4 is a block diagram illustrating a schematic configuration of a computer that functions as a terminal;
Fig. 5 is a block diagram illustrating a schematic configuration of a computer that functions as a user determination section of an administration server;
Fig. 6 is a flowchart illustrating an example of registration processing;
Fig. 7 is a flowchart illustrating an example of transmitting side processing;
Fig. 8 is a flowchart illustrating an example of user determination processing;
Fig. 9 is a diagram for explaining user determination processing; and
Fig. 10 is a diagram for explaining appending operation trait information.

### DESCRIPTION OF EMBODIMENTS

Detailed explanation follows regarding an example of an exemplary embodiment of technology disclosed herein, with reference to the drawings.

In the present exemplary embodiment, explanation is given regarding a user determination system, at an administrator side of a social networking service (SNS), that performs actual user determination on a user posting a message when a message is posted on the SNS from a terminal.

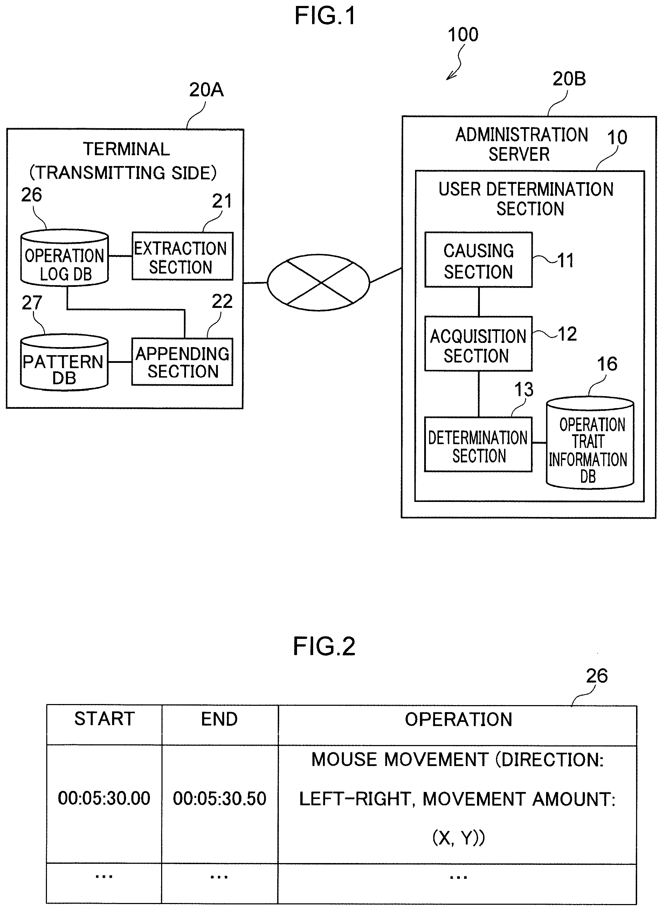

As illustrated in Fig. 1, a user determination system 100 according to the present exemplary embodiment includes a terminal 20A and an administration server 20B connected together through a network. Note that although Fig. 1 depicts only a single terminal 20A, plural of the terminals 20A may be included. Moreover, plural of the administration servers 20B may be included for respective services of the SNS.

The terminal 20A is, for example, a device such as a personal computer (PC), a smartphone, or a tablet. The terminal 20A includes input devices such as a keyboard, mouse, and touch panel display, and receives various operations from users through the input devices. Plural applications such as a mailer, a word processing application, and a spreadsheet application run on the terminal 20A.

The terminal 20A includes an extraction section 21 and an appending section 22 that serve as functional sections related to the user determination system 100.

The extraction section 21 extracts evasion operations from out of user operations performed on the terminal 20A, and stores information related to the extracted evasion operations as operation logs in an operation log DB 26. The evasion operations are user operations to evade simulated abnormalities produced in the terminal 20A by a user determination section 10 of the administration server 20B, described later. Operations performed by the user when abnormalities have occurred in the terminal 20A are operations performed unconsciously by the user, and traits of each user show readily since there are various types of operation such as pressing of any key, and mouse movement.

More specifically, the extraction section 21 extracts, as evasion operations, user operations performed when simulated abnormalities are produced in the terminal 20A by the user determination section 10. Information indicating a pressed key, information indicating that the mouse was moved, or the like, is extracted as the user operation. For information indicating that the mouse was moved, information indicating the direction in which the mouse was moved (the movement path of the mouse) and the amount of movement is extracted. The extraction section 21 also extracts both the start timing and the end timing of the evasion operation. For example, the timing at which the first key was pressed down or the time at which mouse movement started after occurrence of the simulated abnormality may be extracted as the start timing, and the timing at which the final key was released or the timing at which mouse movement stopped in an evasion operation series may be extracted as the end timing. In addition to what sort of evasion operation was taken, the time taken for the operation is another factor that causes traits of the individual user to show readily.

The extraction section 21 stores the extracted evasion operation as an operation log in the operation log DB 26. Fig. 2 illustrates an example of the operation log DB 26. In the operation log DB 26 illustrated in Fig. 2, each row corresponds to a single operation log, and each operation log includes a "start", "end", and "operation" item. "Start" and "end" are the start timing and end timing of the evasion operation indicated by the operation log, and "operation" is the content of the evasion operation indicated by the operation log.

When an SNS message is transmitted to the administration server 20B from the terminal 20A in order to post the SNS message, the appending section 22 references the operation log DB 26, generates operation trait information, and appends the operation trait information to the message.

More specifically, the appending section 22 references a pattern DB 27, and from the operation log DB 26 extracts an evasion operation for a simulated abnormality that occurred not long before the message transmission. Plural evasion operation patterns are transformed into IDs and defined in the pattern DB 27.

For example, the following respective patterns may be established as evasion operations. Note that the numeral listed at the beginning of each pattern is a broad category ID of the evasion operation, and the numerals (symbols) printed before each item from the second row onwards of each pattern are intermediate category IDs and fine category IDs of the evasion operation. A concatenation of the numerals (symbols) of the broad category, the intermediate category, and the fine category is employed as the ID of the evasion operation.
1: mouse operation by a fine movement pattern
   1: left-right, 2: circular, 3: other
2: mouse operation by a large movement pattern
   1: left-right, 2: circular, 3: other
3: repeated pressing of the same keyboard key
   1: a special key: (1) enter, (2) space, (3) an arrow
   2: an alphabet key: (1) left side, (2) central, (3) right side
   3: a number key
   4: another key
4: a single press of a keyboard key
   1: a special key: (1) enter, (2) space, (3) an arrow
   2: an alphabet key: (1) left side, (2) central, (3) right side
   3: a number key
   4: another key
5: another operation

Note that it may be determined whether the mouse operation is fine or large based on the amount of mouse movement that has been extracted as the operation log. Moreover, for (1) left side, (2) central, and (3) right side of the alphabet keys, each key may be pre-allocated to (1) left side, (2) central, or (3) right side based on the placement of that key.

When message transmission has been instructed, the appending section 22 identifies a recent operation log from the operation logs stored in the operation log DB 26. The appending section 22 searches the plural evasion operation patterns defined in the pattern DB 27 for patterns matching the operation indicated by the identified operation log, and identifies the ID of a matching pattern as the evasion operation ID. Moreover, the appending section 22 acquires the time taken for the evasion operation as the evasion operation time from the time difference between the "start" and "end" of the operation log identified as the recent operation log.

The appending section 22 generates operation trait information including the acquired evasion operation ID and evasion operation time. As an example, an evasion operation having ID = 3-1-(1) is identified as the recent evasion operation, and the evasion operation time thereof is 0.5 seconds. In such a case the appending section 22 generates operation trait information such as (3-1-(1), 0.5).

Moreover, the appending section 22 encrypts by, for example, hashing the generated operation trait information using an encryption key distributed in advance, and appends the operation trait information to the message to be transmitted. The encryption key may, for example, be distributed from the administration server 20B when, for example, a user registers to use the SNS, a tool is updated, or permission is given to transmit a message.

When the SNS message is transmitted from the terminal 20A using the functionality of the extraction section 21 and the appending section 22, the message is transmitted with the encrypted operation trait information appended thereto. Note that identification information of the user using the SNS (the "user ID" hereafter) is also appended to the transmitted message.

The administration server 20B performs processing such as posting the SNS message transmitted from the terminal 20A to the internet. Moreover, the administration server 20B includes a user determination section 10 serving as a functional section related to the user determination system 100. The user determination section 10 is an example of a user determination device of technology disclosed herein. The user determination section 10 includes a causing section 11, an acquisition section 12, and a determination section 13. Moreover, an operation trait information DB 16 is stored in a particular storage region of the administration server 20B.

The causing section 11 causes a simulated abnormality in the terminal 20A to occur at a specific timing before the user transmits the SNS message. In the present exemplary embodiment, simulated abnormalities are states that can normally occur while the user is performing normal operations on the terminal 20A, irrespective of the user operations, and are states that lead to operations in which individual user traits show in the unthinking behavior performed by the user to evade the situation. For example, the causing section 11 causes simulated abnormalities such as those below to occur.
- Suspending key input for a specific time (for example, from 5 seconds to 8 seconds) during key input by the user.
- Moving the pointer to the corner of the screen, irrespective of mouse operations by the user.
- Making the pointer vanish for a few seconds, irrespective of mouse operations by the user.
- Making another application running in the background active.
- Starting up a screen saver.
- Transitioning to standby mode (a state in which the PC accepts no input in a high load state).
- Outputting a beep sound.
- Disrupting a portion of the screen.
- Changing the input mode for kana-kanji conversion in text input.

Note that the above are merely examples of simulated abnormalities, and there are other states that may be caused to occur as simulated abnormalities.

The causing section 11 monitors exchanges between the terminal 20A and an SNS processing section (not illustrated in the drawings) of the administration server 20B, and causes one of the simulated abnormalities above to occur on the terminal 20A at a specific timing. Exchanges between the terminal 20A and the SNS processing section include, for example, starting up a web browser on the terminal 20A, and accessing the administration server 20B by specifying the URL of the SNS. Exchanges between the terminal 20A and the SNS processing section also include access from the terminal 20A being accepted, and information related to a particular page, such as a login page or a text input page, being transmitted from the administration server 20B to the terminal 20A. The causing section 11 can detect the specific timing at which to cause the simulated abnormality to occur from such exchanges.

The specific timing may be, for example, a timing during input of a message. In such cases, when transmission of a text input page from the SNS processing section to the terminal 20A is detected by the causing section 11, the causing section 11 causes a simulated abnormality to occur at a timing a specific time after (for example, 5 seconds after) transmission of the text input page.

The simulated abnormality may be caused to occur by transmitting page information indicating the simulated abnormality state to be caused to the terminal 20A. The page information indicating the simulated abnormality state includes, for example, a setting to accept no input, according to the simulated abnormality to be caused. For example, when a simulated abnormality is caused in which transition is made to a standby state, page information including an item (for example, a hourglass animation) indicating a state in which no input is accepted, and a setting to accept no key input or mouse operations, is transmitted. In addition to causing the simulated abnormality, the causing section 11 also sends notification thereof to the extraction section 21 of the terminal 20A. The above evasion operation extraction is performed by the extraction section 21 when triggered by this notification.

When a message transmitted from the terminal 20A is received by the administration server 20B, the acquisition section 12 acquires the operation trait information, and the user ID appended to the received message. The acquisition section 12 uses the predetermined encryption key to decrypt the acquired operation trait information, and passes the decrypted operation trait information to the determination section 13 together with the user ID.

The determination section 13 determines whether or not the sender of the message is an authorized user based on the operation trait information passed from the acquisition section 12, and the operation trait information DB 16. Note that the "authorized user" is an example of a "specific user" of the technology disclosed herein.

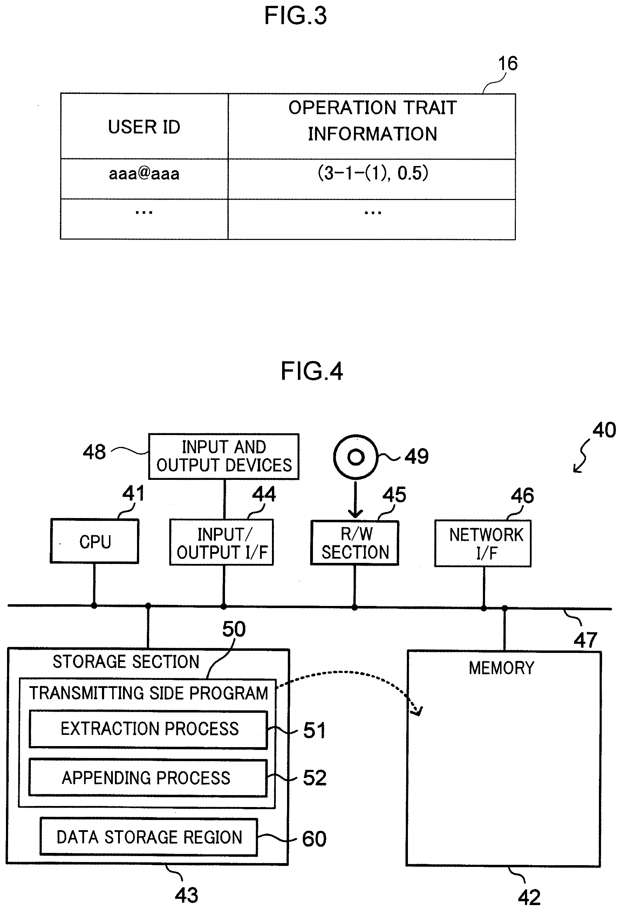

As illustrated in Fig. 3, the operation trait information DB 16 stores the "user ID" and the "operation trait information" associated with each other. The operation trait information associated with the user ID is operation trait information indicating the evasion operation performed by the authorized user indicated by the user ID. Note that a single user ID may be stored associated with plural pieces of operation trait information in the operation trait information DB 16.

More specifically, the determination section 13 searches the operation trait information DB 16 for the operation trait information corresponding to the user ID matching the user ID passed from the acquisition section 12. The determination section 13 then determines whether or not the operation trait information passed from the acquisition section 12 belongs in a particular range of similarity with the operation trait information found from the operation trait information DB 16. Cases in which they belong in a range of similarity may, for example, be cases in which the evasion operation IDs match and the difference between the evasion operation times is within a particular range (for example, 20% or less). Note that determination as to whether or not the operation trait information belongs in a range of similarity is not limited to this example, and another basis may be employed.

In cases in which the operator of the terminal 20A is different, there is a high probability that the operation trait information appended to the message transmitted from that terminal 20A will be different. Namely, cases in which the operation trait information passed from the acquisition section 12 does not belong in a particular range of similarity with the operation trait information found from the operation trait information DB 16 may be regarded as cases in which, for example, the terminal 20A has been hijacked by an unauthorized user who then fraudulently transmitted the message. Thus, the determination section 13 determines that the sender of the message is an authorized user when they belong in a range of similarity, and determines that the sender of the message is not an authorized user when they do not belong in a range of similarity.

Note that in cases in which plural pieces of operation trait information that correspond to the user ID matching the user ID passed from the acquisition section 12 are stored in the operation trait information DB 16, determination may be made as to whether or not any of the pieces of operation trait information belong in the particular range of similarity.

In cases in which it has been determined that the sender of the message is not an authorized user, the determination section 13, for example, returns an alert message to the terminal 20A at the transmitting side, and performs alert processing without posting (publishing) the message transmitted from the terminal 20A. Moreover, in cases in which it has been determined that the sender of the message is an authorized user, the determination section 13 notifies this to the SNS processing section. In such cases, in the SNS processing section, ordinary message processing is performed, and the message transmitted from the terminal 20A is posted (published).

In cases in which it has been determined that the sender of the message is an authorized user, the determination section 13 adds to the operation trait information DB 16 the combination of the user ID, and the operation trait information passed from the acquisition section 12.

The terminal 20A may, for example, be implemented by a computer 40 illustrated in Fig. 4. The computer 40 includes a CPU 41, memory 42 serving as a temporary storage region, and a non-volatile storage section 43. The computer 40 also includes an input/output interface (I/F) 44 to which input and output devices 48, such as a display device and an input device, are connected. The computer 40 also includes a read/write (R/W) section 45 that controls reading and writing of data from and to a recording medium 49, and a network I/F 46 connected to a network such as the internet. The CPU 41, the memory 42, the storage section 43, the input/output I/F 44, the R/W section 45, and the network I/F 46 are connected to one another through a bus 47.

The storage section 43 may be implemented by a hard disk drive (HDD), a solid state drive (SSD), flash memory, or the like. A transmitting side program 50 that causes the computer 40 to function as the terminal 20A is stored in the storage section 43 serving as a recording medium. Moreover, the storage section 43 includes a data storage region 60 that stores the data configuring both the operation log DB 26 and the pattern DB 27. Note that, although omitted from the drawings, the storage section 43 also stores programs, data, and the like related to other applications that run on the terminal 20A.

The CPU 41 reads the transmitting side program 50 from the storage section 43, expands the transmitting side program 50 into the memory 42, and sequentially executes processes included in the transmitting side program 50. Moreover, the CPU 41 reads the data from the data storage region 60, and expands both the operation log DB 26 and the pattern DB 27 into the memory 42.

The transmitting side program 50 includes an extraction process 51 and an appending process 52. The CPU 41 operates as the extraction section 21 illustrated in Fig. 1 by executing the extraction process 51. Moreover, the CPU 41 operates as the appending section 22 illustrated in Fig. 1 by executing the appending process 52. The computer 40 executing the transmitting side program 50 thereby functions as the terminal 20A.

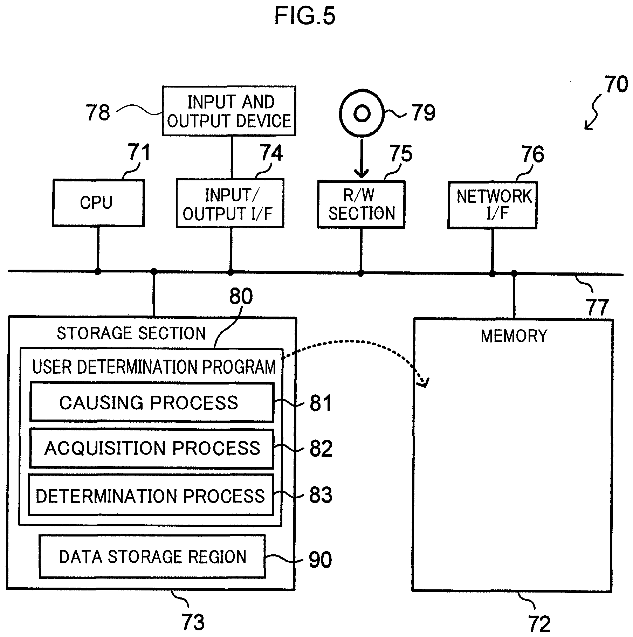

The administration server 20B may, for example, be implemented by a computer 70 illustrated in Fig. 5. The computer 70 includes a CPU 71, memory 72, and a storage section 73. Moreover, the computer 70 includes an input/output I/F 74 to which input and output devices 78 are connected, an R/W section 75 that controls reading and writing of data from and to a recording medium 79, and a network I/F 76. The CPU 71, the memory 72, the storage section 73, the input/output I/F 74, the R/W section 75, and the network I/F 76 are connected to one another through a bus 77.

The storage section 73 may be implemented by an HDD, an SSD, flash memory, or the like. A user determination program 80 that causes the computer 70 to function as the user determination section 10 of the administration server 20B is stored in the storage section 73 serving as a recording medium. The storage section 73 also includes a data storage region 90 that stores data configuring the operation trait information DB 16. Note that, although omitted from the drawings, the storage section 73 also stores programs, data, and the like related to other applications running on the administration server 20B.

The CPU 71 reads the user determination program 80 from the storage section 73, expands the user determination program 80 into the memory 72, and sequentially executes processes included in the user determination program 80. Moreover, the CPU 71 reads the data from the data storage region 90, and expands the operation trait information DB 16 into the memory 42.

The user determination program 80 includes a causing process 81, an acquisition process 82, and a determination process 83. The CPU 71 operates as the causing section 11 illustrated in Fig. 1 by executing the causing process 81. The CPU 71 also operates as the acquisition section 12 illustrated in Fig. 1 by executing the acquisition process 82. The CPU 71 also operates as the determination section 13 illustrated in Fig. 1 by executing the determination process 83. The computer 70 executing the user determination program 80 thereby functions as the user determination section 10 of the administration server 20B.

Note that the functionality implemented by the transmitting side program 50 and the user determination program 80 can also be implemented by, for example, a semiconductor integrated circuit, and more specifically, by an application specific integrated circuit (ASIC) or the like.

Next, explanation follows regarding operation of the user determination system 100 according to the present exemplary embodiment.

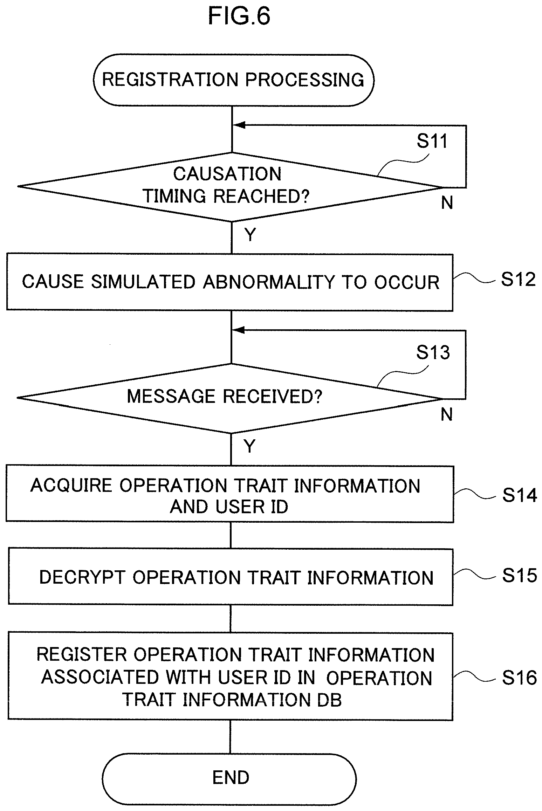

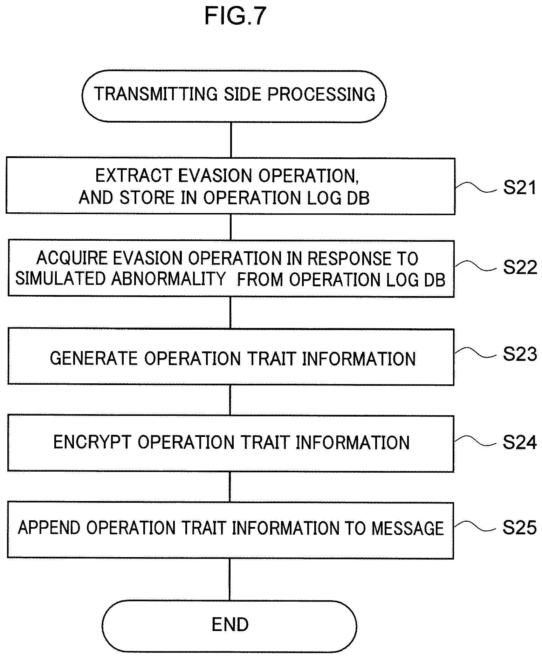

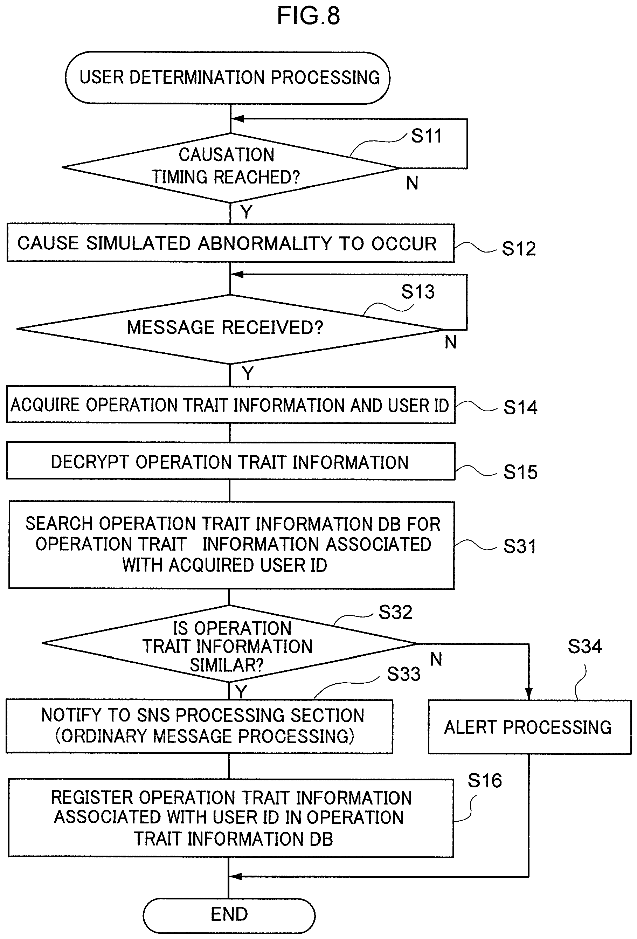

First, initial registration for the service is performed when the user starts using the SNS. At this time, the functional sections of the extraction section 21 and the appending section 22 are set on the terminal 20A by automatically downloading an add-in tool or the like to the terminal 20A from the administration server 20B. Moreover, during the initial registration for the service, registration processing illustrated in Fig. 6 is executed on the administration server 20B, transmitting side processing illustrated in Fig. 7 is executed on the terminal 20A, and the operation trait information of the user is registered in the operation trait information DB 16. Subsequently, at a specific timing when the SNS service is being used by the user, user determination processing illustrated in Fig. 8 is executed on the administration server 20B, and the transmitting side processing illustrated in Fig. 7 is executed on the terminal 20A. Detailed description follows regarding each processing.

At step S11 of the registration processing illustrated in Fig. 6, the causing section 11 monitors exchanges between the terminal 20A and the SNS processing section of the administration server 20B (not illustrated in the drawings), and determines whether or not the timing at which to cause the simulated abnormality to occur has been reached. Processing transitions to step S12 in cases in which the timing at which to cause the simulated abnormality to occur has been reached, and the determination of the current step is repeated in cases in which the timing at which to cause the simulated abnormality has not been reached.

At step S12, the causing section 11, for example, transmits the page information indicating the simulated anomaly state to the terminal 20A, and causes the simulated abnormality to occur on the terminal 20A.

When notified from the causing section 11 of the administration server 20B that the simulated abnormality has been caused to occur on the terminal 20A, the transmitting side processing illustrated in Fig. 7 is executed on the terminal 20A.

At step S21 of the transmitting side processing illustrated in Fig. 7, the extraction section 21 extracts the evasion operation of the user in response to the simulated abnormality caused on the terminal 20A, together with the start timing and the end timing thereof, and stores the extracted evasion operation in the operation log DB 26 as an operation log.

Next, at step S22, the appending section 22 identifies the evasion operation performed when the simulated abnormality occurred from the operation log DB 26, and acquires the evasion operation time together with the evasion operation ID.

Next, at step S23, the appending section 22 generates the operation trait information that includes the acquired evasion operation ID, and evasion operation time. Next, at step S24, the appending section 22 encrypts the generated operation trait information using the encryption key that was distributed in advance. Next, at step S25, the appending section 22 appends the encrypted operation trait information to the message to be transmitted, and the transmitting side processing ends.

The message to which the encrypted operation trait information has been appended is thereby transmitted from the terminal 20A together with the user ID.

Next, returning to the registration processing of Fig. 6, at step S13, the acquisition section 12 determines whether or not the message transmitted from the terminal 20A was received. Processing transitions to step S14 in cases in which the message received, and the determination of the present step repeats in cases in which the message was not received.

At step S14, the acquisition section 12 acquires the operation trait information and the user ID appended to the received message. Next, at step S15, the acquisition section 12 uses the encryption key that was distributed in advance to decrypt the acquired operation trait information, and passes the acquired user ID and the decrypted operation trait information to the determination section 13. Next, at step S16, the determination section 13 associates the operation trait information with the passed user ID, and registers this in the operation trait information DB 16, and the registration processing ends.

Next, explanation follows regarding the user determination processing illustrated in Fig. 8. Note that processing similar to the registration processing illustrated in Fig. 6 is allocated the same reference numerals and detailed explanation thereof is omitted.

At step S11, if the causing section 11 determines that the timing at which the simulated abnormality is to be caused to occur has been reached, at step S12, the causing section 11 causes the simulated abnormality to occur on the terminal 20A. This triggers execution of the transmitting side processing illustrated in Fig. 7 on the terminal 20A. Then, if the message transmitted from the terminal 20A is received at step S13, the acquisition section 12 acquires the operation trait information and the user ID appended to the received message at step S14. Next, at step S15, the acquisition section 12 decrypts the acquired operation trait information, and passes the operation trait information and the user ID to the determination section 13.

Next, at step S31, the determination section 13 searches the operation trait information DB 16 for the operation trait information corresponding to the user ID matching the user ID passed from the acquisition section 12. Next, at step S32, the determination section 13 determines whether or not the operation trait information passed from the acquisition section 12 belongs in a particular range of similarity with the operation trait information found from the operation trait information DB 16. In cases in which they belong in a range of similarity, the determination section 13 determines that the sender of the message is an authorized user, and processing transitions to step S33. However, in cases in which they do not belong in a range of similarity, the determination section 13 determines that the sender of the message is not an authorized user, and processing transitions to step S34.

At step S33, the determination section 13 notifies the SNS processing section that the sender of the message is an authorized user. Ordinary message processing is performed by the SNS processing section accordingly. Next, at step S16, the determination section 13 adds to the operation trait information DB 16 the combination of the user ID and the operation trait information passed from the acquisition section 12, and the user determination processing ends.

At step S34 however, the determination section 13, for example, responds to the terminal 20A at the transmitting side with an alert message without posting (publishing) the message transmitted from the terminal 20A, and performs alert processing, and the user determination processing then ends.

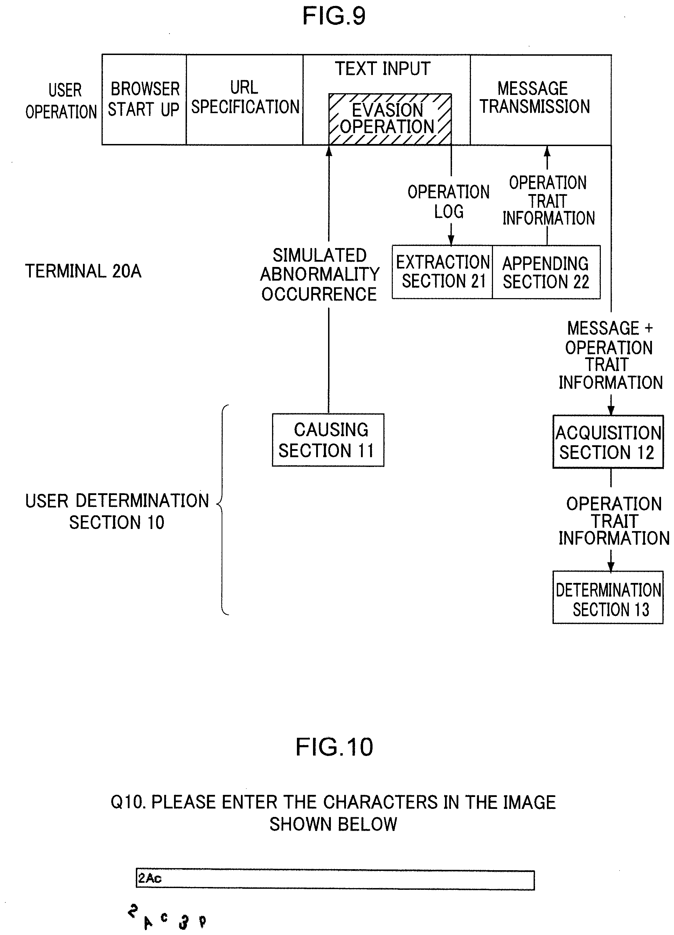

The relationship between the user operation, and the functional sections that function on the terminal 20A and the functional sections that function on the user determination section 10 in the user determination processing is illustrated in Fig. 9.

As explained above, according to the user determination system of the present exemplary embodiment, user consistency is determined using the operation trait information indicating the evasion operation of the user performed when the simulated abnormality was caused to occur on the terminal. The evasion operation enables evasion actions to be made difficult to spoof since the operation is unconsciously performed by the user. Moreover, the burden on the user is low compared to cases in which a specific intentional operation is forced on the user. The traits of the individual user show readily since the user unconsciously performs an operation from out of various types of evasion operation. Moreover, the simulated abnormality can be caused to occur at a freely selected timing from the administration server side, enabling the user consistency to be determined by a challenge and response method.

Encrypting the operation trait information and appending the encrypted operation trait information to the email enables the operation trait information to be prevented from being intercepted or the like on the network.

Explanation has been given of a case in which the pattern DB 27 is referenced and an ID is generated by the extraction section 21 of the terminal 20A when the operation logs of the target operations are extracted and the operation trait information is generated by the appending section 22 in the above exemplary embodiment. However, there is no limitation thereto. Configuration may be made such that the pattern DB 27 is referenced and the ID is generated and then stored when the operation log extracted by the extraction section 21 is stored in the operation log DB 26.

The evasion operations given in the exemplary embodiment above are merely examples, and there is no limitation to these examples. It is sufficient to extract evasion operations corresponding to the simulated abnormality caused to occur. For example, suppose that the active application is changed as a simulated abnormality. In such a case, it is conceivable that the user will perform an evasion operation that switches to the application that was being used before the simulated abnormality occurred in order to return to the original state. Thus the following respective patterns may be defined as evasion operations related to application switching. Note that the numeral listed at the beginning of each pattern is the ID of the evasion operation. Moreover, application is shortened to "app" below.
1: a listing of thumbnails of running apps is displayed using a shortcut key (ALT + TAB), then the app selection state is switched using a shortcut key (ALT + TAB), and the app selected when the ALT key is released is switched to
2: a listing of thumbnails of running apps is displayed using a shortcut key (ALT + TAB), and then an app that has been selected from the listing by clicking with the mouse is switched to
3: a listing of thumbnails of running apps is displayed using a shortcut key (ALT + SHIFT + TAB), then the app selection state is switched using a shortcut key (ALT + TAB), and the app selected when the ALT key is released is switched to
4: a listing of thumbnails of running apps is displayed using a shortcut key (ALT + SHIFT + TAB), and then an app that has been selected from the listing by clicking with the mouse is switched to
5: a flip 3D display of running apps is displayed using a shortcut key (WINDOWS (registered trademark) key + TAB), then a selection is made using a shortcut key (WINDOWS (registered trademark) key + TAB), the app selection state is switched, and the app selected when the WINDOWS (registered trademark) key is released is switched to
6: a flip 3D listing of running apps is displayed using a shortcut key (WINDOWS (registered trademark) key + TAB), and then an app selected from the listing by clicking with the mouse is switched to
7: a switch is made by clicking the title bar of the app to be switched to using the mouse
8: a switch is made by clicking any location within the window of the app to be switched to using the mouse
9: an app selected by clicking on an app displayed on the taskbar using the mouse is switched to
10: use of a shortcut key (ALT + Esc) causes the window of the currently active app to be minimized and the previously used app to be made active, thereby causing a switch

Sometimes the evasion operation of the user changes with the passage of time. Newly acquired operation trait information may therefore be added to the operation trait information DB 16, and old operation trait information erased from the operation trait information DB 16, causing changes in the evasion operation of the user to be tracked. More specifically, combinations of the user ID and the operation trait information may be added to the operation trait information DB 16, and operation trait information for which a specific time (for example, 2 or 3 weeks) has elapsed since being stored in the operation trait information DB 16 may be erased.

Although explanation has been given regarding a case in which the operation trait information is appended to an SNS message in the exemplary embodiment above, there is no limitation to this example. It is sufficient to employ a method in which operation trait information on the transmitting side terminal is attached to any communication from a terminal and delivered an administration server. For example, as illustrated in Fig. 10, a frozen state (a state in which key input is disabled) may be caused to occur for a particular number of seconds (for example, 8 seconds) at a timing during text string input for a captcha image when a particular number of characters (for example, 3 characters) have been input. Operation trait information indicating evasion operations performed by the user in this interval may be appended to data packets related to the input text string, and transmitted to the administration server.

As described above, the actual user can be identified under guidance by the administrator side in order to perform user identification using operation trait information indicating evasion operation traits for simulated abnormalities caused to occur at a specific timing. For example, when it has been determined that a shared PC used by plural users is being used by a specific user, this can be used to implement a service that notifies information or advertisements according to the user. In such cases, a database that, for each user registered for the service, registers information or advertising information according to the user may be pre-stored, and information and advertisements according to the user determined to be consistent may be acquired from the database and displayed.

Moreover, the evasion operation is an unconscious user operation in response to the abnormality, and may be information capable of predicting the emotional characteristics of the user. For example, a user who performs an evasion operation in which the mouse is moved greatly or a key is repeatedly struck, demonstrates confidence toward use of the application, while, conversely, users who do not perform bold evasion operations demonstrate a lack of confidence when using the application. Thus, a database of associations between operation trait information and emotional characteristics may be pre-stored, and the emotional characteristics of the user determined to be consistent may be estimated from the acquired operation trait information. Then, security countermeasures and information provision matching the predicted emotional characteristics may be performed.

Note that although explanation has been given of a mode in which the transmitting side program 50 and the user determination program 80 are pre-stored (installed) to the storage section 43, 73, there is no limitation thereto. The user determination program according to technology disclosed herein may be provided in a format recorded on a recording medium such as a CD-ROM, a DVD-ROM, or USB memory.

One aspect of technology disclosed herein enables evasion actions to be made difficult to spoof.

## Claims

1. A user determination device (10) comprising:
a causing section (11) configured to cause a simulated abnormality to occur on a terminal (20A), the terminal (20A) being configured to receive an operation from a user via an input device;
an acquisition section (12) configured to acquire, from the terminal (20A), a message input by the user and operation information (26) appended to the message, the operation information (26) indicating an evasion operation of the user in response to the simulated abnormality that the causing section caused to occur on the terminal; and
a determination section (13) configured to determine whether or not the user is a specific user according to whether or not the operation information acquired by the acquisition section belongs in a particular range of similarity with operation information (16) stored associated with the specific user, wherein the causing section (11) is configured to cause switching an active window, starting up a screensaver, transitioning to a standby state, or disrupting a screen, to occur as the simulated abnormality.

2. The user determination device of claim 1, wherein the operation information includes operation identification information appended for each type of the evasion operation, and a time taken for the evasion operation.

3. The user determination device of any one of claim 1 to claim 2, wherein the operation information is information encrypted using predetermined key information.

4. The user determination device of any one of claim 1 to claim 3, further configured to raise an alert in cases in which the determination section (13) determines that the user is not the specific user.

5. The user determination device of any one of claim 1 to claim 4, further comprising:
an updating section configured to add operation information acquired by the acquisition section, and to erase operation information for which a specific time has elapsed since being stored, to or from the operation information stored associated with the specific user.

6. A user determination method comprising:
causing a simulated abnormality to occur on a terminal (S12), the terminal provided for receiving an operation from a user via an input device;
acquiring from the terminal (20A) a message input by the user and operation information appended to the message, the operation information(26)_indicating an evasion operation of the user in response to the simulated abnormality that occurred on the terminal (S14); and
by a processor, determining whether or not the user is a specific user according to whether or not the acquired operation information belongs in a particular range of similarity with operation information stored associated with the specific user (S31, S32),
wherein switching an active window, starting up a screensaver, transitioning to a standby state, or disrupting a screen is caused to occur as the simulated abnormality.

7. The user determination method of claim 6 , wherein the operation information includes operation identification information appended for each type of the evasion operation, and a time taken for the evasion operation.

8. The user determination method of any one of claim 6 to claim 7, wherein the operation information is information encrypted using predetermined key information (S24).

9. The user determination method of any one of claim 6 to claim 8, further comprising raising an alert (S34) in cases in which the user is determined to not be the specific user in the determination as to whether or not the user is the specific user.

10. The user determination method of any one of claim 6 to claim 9, further comprising:
adding acquired operation information, and erasing operation information for which a specific time has elapsed since being stored, to or from the operation information stored associated with the specific user.

11. A user determination program that causes a computer (70) to execute a process, the process comprising:
causing a simulated abnormality to occur on a terminal (81), the terminal provided for receiving an operation from a user via an input device;
acquiring from the terminal (20A) a message input by the user and operation information appended to the message, the operation information(26)_indicating an evasion operation of the user in response to the simulated abnormality that occurred on the terminal (82); and
determining whether or not the user is a specific user according to whether or not the acquired operation information belongs in a particular range of similarity with operation information stored associated with the specific user (83),
wherein switching an active window, starting up a screensaver, transitioning to a standby state, or disrupting a screen is caused to occur as the simulated abnormality.

## Patentansprüche

1. Benutzerbestimmungsvorrichtung (10), umfassend:
einen Auslösungsabschnitt (11), der dazu konfiguriert ist, auszulösen, dass sich eine simulierte Abnormalität auf einem Endgerät (20A) ereignet, wobei das Endgerät (20A) dazu konfiguriert ist, eine Bedienung von einem Benutzer über eine Eingabevorrichtung zu empfangen;
einen Übernahmeabschnitt (12), der dazu konfiguriert ist, von dem Endgerät (20A) eine durch den Benutzer eingegebene Nachricht und eine an die Nachricht angehängte Bedienungsinformation (26) zu übernehmen, wobei die Bedienungsinformation (26) eine Umgehungsbedienung des Benutzers ansprechend auf die simulierte Abnormalität anzeigt, die der Auslösungsabschnitt ausgelöst hat, sich auf dem Endgerät zu ereignen; und
einen Bestimmungsabschnitt (13), der dazu konfiguriert ist, zu bestimmen, ob der Benutzer ein spezifischer Benutzer ist oder nicht, demgemäß, ob die durch den Übernahmeabschnitt übernommene Bedienungsinformation in einen bestimmten Ähnlichkeitsbereich mit mit dem spezifischen Benutzer verbundenen gespeicherten Bedienungsinformationen (16) gehört oder nicht, wobei der Auslösungsabschnitt (11) dazu konfiguriert ist, auszulösen, dass sich ein Wechseln eines aktiven Fensters, ein Starten eines Bildschirmschoners, ein Übergehen in einen Bereitschaftszustand oder ein Trennen eines Bildschirms als die simulierte Abnormalität ereignet.

2. Benutzerbestimmungsvorrichtung nach Anspruch 1, wobei die Bedienungsinformation eine für jeden Typ der Umgehungsbedienung angehängte Bedienungsidentifikationsinformation und eine für die Umgehungsbedienung benötigte Zeit einschließt.

3. Benutzerbestimmungsvorrichtung nach einem von Anspruch 1 bis Anspruch 2, wobei die Bedienungsinformation eine unter Verwendung einer vorbestimmten Schlüsselinformation verschlüsselte Information ist.

4. Benutzerbestimmungsvorrichtung nach einem von Anspruch 1 bis Anspruch 3, die weiter dazu konfiguriert ist, in Fällen, in denen der Bestimmungsabschnitt (13) bestimmt, dass der Benutzer nicht der spezifische Benutzer ist, einen Alarm auszulösen.

5. Benutzerbestimmungsvorrichtung nach einem von Anspruch 1 bis Anspruch 4, die weiter umfasst:
einen Aktualisierungsabschnitt, der dazu konfiguriert ist, eine durch den Übernahmeabschnitt übernommene Bedienungsinformation und eine Bedienungsinformation, für die seit ihrer Speicherung eine spezifische Zeit verstrichen ist, zu den mit dem spezifischen Benutzer verbundenen gespeicherten Bedienungsinformationen hinzuzufügen oder aus diesen zu löschen.

6. Benutzerbestimmungsverfahren, umfassend:
Auslösen, dass sich eine simulierte Abnormalität auf einem Endgerät ereignet (S12), wobei das Endgerät zum Empfangen einer Bedienung von einem Benutzer über eine Eingabevorrichtung bereitgestellt ist;
Übernehmen, von dem Endgerät (20A), einer durch den Benutzer eingegebenen Nachricht und einer an die Nachricht angehängten Bedienungsinformation, wobei die Bedienungsinformation (26) eine Umgehungsbedienung des Benutzers ansprechend auf die simulierte Abnormalität, die sich auf dem Endgerät ereignet hat, anzeigt (S14); und
durch einen Prozessor, Bestimmen, ob der Benutzer ein spezifischer Benutzer ist oder nicht, demgemäß, ob die übernommene Bedienungsinformation in einen bestimmten Ähnlichkeitsbereich mit mit dem spezifischen Benutzer verbundenen gespeicherten Bedienungsinformationen gehört oder nicht (S31, S32),
wobei ein Wechseln eines aktiven Fensters, ein Starten eines Bildschirmschoners, ein Übergehen in einen Bereitschaftszustand oder ein Trennen eines Bildschirms als die simulierte Abnormalität sich zu ereignen ausgelöst wird.

7. Benutzerbestimmungsverfahren nach Anspruch 6, wobei die Bedienungsinformation eine für jeden Typ der Umgehungsbedienung angehängte Bedienungsidentifikationsinformation und eine für die Umgehungsbedienung benötigte Zeit einschließt.

8. Benutzerbestimmungsverfahren nach einem von Anspruch 6 bis Anspruch 7, wobei die Bedienungsinformation eine unter Verwendung einer vorbestimmten Schlüsselinformation verschlüsselte Information ist (S24).

9. Benutzerbestimmungsverfahren nach einem von Anspruch 6 bis Anspruch 8, das weiter in Fällen, in denen in der Bestimmung, ob der Benutzer der spezifische Benutzer ist oder nicht, bestimmt wird, dass der Benutzer nicht der spezifische Benutzer ist, ein Auslösen eines Alarms umfasst (S34).

10. Benutzerbestimmungsverfahren nach einem von Anspruch 6 bis Anspruch 9, das weiter umfasst:
Hinzufügen einer übernommenen Bedienungsinformation und Löschen einer Bedienungsinformation, für die seit ihrer Speicherung eine bestimmte Zeit verstrichen ist, zu oder aus den mit dem spezifischen Benutzer verbundenen gespeicherten Bedienungsinformationen.

11. Benutzerbestimmungsprogramm, das auslöst, dass ein Computer (70) einen Prozess ausführt, wobei der Prozess umfasst:
Auslösen, dass sich eine simulierte Abnormalität auf einem Endgerät (81) ereignet, wobei das Endgerät zum Empfangen einer Bedienung von einem Benutzer über eine Eingabevorrichtung bereitgestellt ist;
Übernehmen, von dem Endgerät (20A) einer durch den Benutzer eingegebenen Nachricht und einer an die Nachricht angehängten Bedienungsinformation, wobei die Bedienungsinformation (26) eine Umgehungsbedienung des Benutzers ansprechend auf die simulierte Abnormalität, die sich auf dem Endgerät (82) ereignet hat, anzeigt; und
Bestimmen, ob der Benutzer ein spezifischer Benutzer ist oder nicht, demgemäß, ob die übernommene Bedienungsinformation in einen bestimmten Ähnlichkeitsbereich mit mit dem spezifischen Benutzer (83) verbundenen gespeicherten Bedienungsinformationen gehört oder nicht,
wobei ein Wechseln eines aktiven Fensters, ein Starten eines Bildschirmschoners, ein Übergehen in einen Bereitschaftszustand oder ein Trennen eines Bildschirms als die sich zu ereignende simulierte Abnormalität ausgelöst wird.

## Revendications

1. Dispositif de détermination d'utilisateur (10) comprenant :
une section de causalité (11) configurée pour amener une anomalie simulée à se produire sur un terminal (20A), le terminal (20A) étant configuré pour recevoir une opération provenant d'un utilisateur via un dispositif d'entrée ;
une section d'acquisition (12) configurée pour acquérir, en provenance du terminal (20A), un message entré par l'utilisateur et des informations d'opération (26) ajoutées au message, les informations d'opération (26) indiquant une opération de fraude de l'utilisateur en réponse à l'anomalie simulée que la section de causalité a amené à se produire sur le terminal ; et
une section de détermination (13) configurée pour déterminer si vraiment l'utilisateur est un utilisateur spécifique selon si vraiment les informations d'opération acquises par la section d'acquisition appartiennent à une plage particulière de similitude avec des informations d'opération (16) stockées associées à l'utilisateur spécifique, dans lequel la section de causalité (11) est configurée pour amener la commutation d'une fenêtre active, le démarrage d'un économiseur d'écran, la transition à un état d'attente, ou la perturbation d'un écran, à se produire en tant qu'anomalie simulée.

2. Dispositif de détermination d'utilisateur selon la revendication 1, dans lequel les informations d'opération incluent des informations d'identification d'opération ajoutées pour chaque type de l'opération de fraude et un temps pris pour l'opération de fraude.

3. Dispositif de détermination d'utilisateur selon l'une quelconque de la revendication 1 ou de la revendication 2, dans lequel les informations d'opération sont des informations chiffrées utilisant des informations de clef prédéterminées.

4. Dispositif de détermination d'utilisateur selon l'une quelconque de la revendication 1 à la revendication 3, configuré en outre pour donner naissance à une alerte dans des cas dans lesquels la section de détermination (13) détermine que l'utilisateur n'est pas l'utilisateur spécifique.

5. Dispositif de détermination d'utilisateur selon l'une quelconque de la revendication 1 à la revendication 4, comprenant en outre :
une section de mise à jour configurée pour ajouter des informations d'opération acquises par la section d'acquisition et pour effacer des informations d'opération pour lesquelles un temps spécifique s'est écoulé depuis le stockage, aux ou des informations d'opération stockées associées à l'utilisateur spécifique.

6. Procédé de détermination d'utilisateur comprenant :
le fait d'amener une anomalie simulée à se produire sur un terminal (S12), le terminal étant prévu pour recevoir une opération en provenance d'un utilisateur via un dispositif d'entrée ;
l'acquisition en provenance du terminal (20A) d'un message entré par l'utilisateur et d'informations d'opération ajoutées au message, les informations d'opération (26) indiquant une opération de fraude de l'utilisateur en réponse à l'anomalie simulée qui s'est produite sur le terminal (S14) ; et
par un processeur, la détermination si vraiment l'utilisateur est un utilisateur spécifique selon si vraiment les informations d'opération acquises appartiennent à une plage particulière de similitude avec des informations d'opération stockées associées à l'utilisateur spécifique (S31, S32),
dans lequel la commutation d'une fenêtre active, le démarrage d'un économiseur d'écran, la transition à un état d'attente, ou la perturbation d'un écran sont amenés à se produire en tant qu'anomalie simulée.

7. Procédé de détermination d'utilisateur selon la revendication 6, dans lequel les informations d'opération incluent des informations d'identification d'opération ajoutées pour chaque type de l'opération de fraude et un temps pris pour l'opération de fraude.

8. Procédé de détermination d'utilisateur selon l'une quelconque de la revendication 6 ou de la revendication 7, dans lequel les informations d'opération sont des informations chiffrées en utilisant des informations de clef prédéterminées (S24).

9. Procédé de détermination d'utilisateur selon l'une quelconque de la revendication 6 à la revendication 8, comprenant en outre la naissance d'une alerte (S34) dans des cas dans lesquels l'utilisateur est déterminé comme n'étant pas l'utilisateur spécifique dans la détermination quant à savoir si vraiment l'utilisateur est l'utilisateur spécifique.

10. Procédé de détermination d'utilisateur selon l'une quelconque de la revendication 6 à la revendication 9, comprenant en outre :
l'ajout d'informations d'opération acquises et l'effacement d'informations d'opération pour lesquelles un temps spécifique s'est écoulé depuis le stockage, aux ou des informations d'opération stockées associées à l'utilisateur spécifique.

11. Programme de détermination d'utilisateur qui amène un ordinateur (70) à exécuter un processus, le processus comprenant :
le fait d'amener une anomalie simulée à se produire sur un terminal (81), le terminal étant prévu pour recevoir une opération en provenance d'un utilisateur via un dispositif d'entrée ;
l'acquisition en provenance du terminal (20A) d'un message entré par l'utilisateur et d'informations d'opération ajoutées au message, les informations d'opération (26) indiquant une opération de fraude de l'utilisateur en réponse à l'anomalie simulée qui s'est produite sur le terminal (82) ; et
la détermination si vraiment l'utilisateur est un utilisateur spécifique selon si vraiment les informations d'opération acquises appartiennent à une plage particulière de similitude avec des informations d'opération stockées associées à l'utilisateur spécifique (83),
dans lequel la commutation d'une fenêtre active, le démarrage d'un économiseur d'écran, la transition à un état d'attente, ou la perturbation d'un écran sont amenés à se produire en tant qu'anomalie simulée.
